# EUROPEAN PATENT SPECIFICATION

(11) **EP 1 761 581 B1**
(45) Date of publication and mention of the grant of the patent: **24.10.2007**
(21) Application number: 05773996.3
(22) Date of filing: 20.06.2005
(51) Int. Cl.: C08G 59/50, C08G 59/18, C08G 59/54

(54) **CURING AGENTS FOR EPOXY RESINS**
HÄRTUNGSMITTEL FÜR EPOXIDHARZE
AGENTS DE TRAITEMENT POUR RESINES EPOXYDE

(30) Priority: 21.06.2004 DE 102004029921
(43) Date of publication of application: 14.03.2007
(73) Proprietor: Huntsman Advanced Materials (Switzerland) GmbH, 4057 Basel (CH); Huntsman Advanced Materials (Deutschland) GmbH & Co. KG, 59192 Bergkamen (DE)
(72) Inventor: VOLLE, Jörg, 59379 Selm-Bork (DE); VOGEL, Michael, 79588 Efringen-Kirchen (DE); GABUTTI, Claudio Alexander, CH-4106 Therwil (CH); KROTZEK, Alwin, 59368 Werne (DE)
(74) Representative: Hoffmann, Daniele
(86) International application number: PCT/EP2005/052854
(87) International publication number: WO 2005/123802

(56) References cited:
- EP-A- 0 454 027
- PATENT ABSTRACTS OF JAPAN vol. 1998, no. 10, 31 August 1998 (1998-08-31) & JP 10 139861 A (FUJI KASEI KOGYO KK), 26 May 1998 (1998-05-26)
- PATENT ABSTRACTS OF JAPAN vol. 016, no. 093 (C-0917), 6 March 1992 (1992-03-06) & JP 03 275781 A (NIPPON STEEL CHEM CO LTD; others: 01), 6 December 1991 (1991-12-06)

## Description

The invention rotates to curing agents for epoxy resins, consisting of
A) an adduct obtainable by reacting a1) a polyethylene polyamine having up to six nitrogens in the molecule, and a2) a monoglycidyl ether, and
B) an adduct of b1) a diamine or polyamine and b2) acrylonitrile or
C) a polyaminoamide
and to curable compositions further comprising an epoxide compound.

The use of these curable compositions for producing mouldings and sheetlike structures, and also for applications in the adhesives and sealants sector and for epoxy-resin mortars, is likewise provided by this invention.

Curable compositions based on aminic curing agents and epoxy resins are widely used in industry for the coating and finishing of metallic and mineral substrates, as adhesives and sealants, as matrix resins, as tooling resins or, very generally, as casting resins for producing mouldings or sheetlike structures.

Aminic curing agents used are, in particular, aliphatic, cycloaliphatic or aromatic amines. The mechanical and physical properties of the curable or cured compositions based on these amines are sufficient for many applications. In many cases in practice, however, these products have disadvantages, such as poor surfaces or severe formation of hydrates, for example. These surface defects, however, are not just a visual disruption, as in the case of a topcoat material, for example. The surface defects, particularly the formation of hydrates, may result in a situation in which, when the curing agent has to be overcoated, such as when used as a primer, for example, the inter-coat adhesion is not sufficient, and the subsequently applied topcoat material undergoes redetachment. For this reason it is preferred to use amine compounds which have a low free amine content in these cases use is frequently made of preadducts of such amines with epoxy resins. The advantages, besides improved surface properties, are a lower vapour pressure and hence also reduced odour nuisance and toxicology. Since, however, the free amine content of such compounds is always still very high, use is sometimes made of what are known as "isolated adducts". In this case the excess free amine is separated off by distillation. The disadvantage of these compounds, however, is their viscosity, which is too high. In order to be able to be processed at room temperature and lower temperatures, it is necessary to add relatively large fractions of diluents. That, however, leads to a distinct impairment in the mechanical properties of the cured thermoset. The addition of diluents additionally leads, as a result of emissions, to a severe odour nuisance. In some cases these solvents are hazardous to health or toxic. The pollution of the environment by the outgassing solvents is enormous. Solvent which is present, especially during the application of thick layers, likewise gives rise, technically, to problems; for example, In the case of primers, remanence of solvent In the coating is disruptive and unwanted.

It was therefore an object of the invention to provide hardeners for curable compositions based on epoxy resins, having a comparatively low free amino content, but being simultaneously of low viscosity at room temperature and being processable without the addition of non-reactive diluents or solvents, and having surface properties and mechanical data of the cured thermosets that are at a high level.

This object is achieved in accordance with the invention by the curing agents of the Invention for epoxy resins, consisting of
A) 1%-99%, preferably 10%-90%, more preferably 30%-70% by weight of an adduct obtainable by reacting a1) a polyethylene polyamine having up to six nitrogens in the molecule with a2) a monoglycidyl ether, the adduct of a1) and a2) preferably being isolated by removal of the excess polyethylene polyamine, and
B) 99%-1%, preferably 90%-10%, more preferably 70%-30% by weight of an adduct obtainable by reacting b1) a diamine or polyamine with b2) acrylonitrile or
C) 99%-1%, preferably 90%-10%, more preferably 70%-30% by weight of a polyaminoamide.

The curing agents of the invention have comparatively low viscosities and enable processing at room temperature, so that there is no need to add disruptive solvents and/or plasticizers. The free amine content of these adducts is low.

In comparison to commercial hardeners an approximately comparable processing life (pot life) is combined, surprisingly, with observation of a much quicker cure rate, in particular at low temperatures (10°C). This was not foreseeable. Instead, for approximately the same processing life, the expectation would have been of a comparable cure rate, since normally the processing life is dependent on the cure rate.

Adduct components a2) used for preparing the polyamine adducts A) include monofunctional, preferably aromatic, glycidyl ethers, such as phenyl glycidyl ether, cresyl glycidyl ether, glycidyl ethers based on distilled cashew nut oil, glycidyl ethers based on monoalcohols, styrene oxide, etc. Preference is given to using phenyl glycidyl ether and cresyl glycidyl ether.

As amine compounds a1) use is made of polyethylene polyamines which have not more than 6 (six) nitrogen atoms in the molecule. Preference is given to polyethylene polyamines, such as aminoethylpiperazine, ethylenediamine, diethylenetriamine or triethylenetetramine, for example. Of particular preference the compound a1) is selected from ethylenediamine and/or diethylenetriamine.

To prepare the isolated polyamine adducts A) the epoxide compound is added to an excess of the amine component at 60°C to 80°C with stirring and, after reaction has taken place, the excess of the amine compound is separated off by distillation, under reduced pressure where appropriate.

To prepare the adducts B) the amino compound is placed in the reaction vessel and acrylonitrile is added at 50°C-100°C. For the complete reaction, stirring is carried out for a further 60 min.

The level of adducting is chosen in accordance with the invention such that there are 0.1 to 2.5 mol, preferably 0.5 to 2 mol, of acrylonitrile per mole of the amine compound.

Amines b1) which can be used include in principle all amines which have at least two reactive amine hydrogen atoms, examples being heterocyclic amines such as piperazine, N-aminoethylpiperazine; cycloaliphatic amines such as isophoronediamine, 1,2-(1,3; 1,4)-diaminocydohexane, aminopropylcyclohexylamine, tricydododecanediamine (TCD); araliphatic amines, such as xylylenediamine; aliphatic, optionally substituted amines such as ethylenediamine, propylenediamine, hexamethylenediamine, 2,2,4(2,4,4)-trimethylhexamethylenediamine, 2-methylpentamethylenediamine; ether amine such as 1,7 diamino-4-oxaheptane, 1,10-diamino-4,7-dioxadecane, 1,14-diamino-4,7,10-trioxatetradecane, 1,20-diamino-4,17-dioaeicosane and, in particular, 1,12-diamino-4,9-dioxadodecane. Use may also be made of the ether diamines based on propoxylated diols, triols and polyols ("Jeffamine^{®}" from Huntsman). Additionally it is possible to use polyalkylene polyamines such as diethylenetriamine, triethylenetetramine, dipropylenetriamine, tripropylenetetramine and also high molecular weight amines or adducts or condensates that contain free amine hydrogen.

Preference is given to using xylylenediamine and/or trimethylhexamethylenediamine. Of particular preference the adduct B) is a xylylenediamine-acrylonitrile adduct.

The polyaminoamides C) are prepared by conventional methods, by condensation of diamines or polyamines, preferably polyethylene polyamines, and carboxylic acids. Polyethylene polyamines used are amines which contain 3 or more than 3 nitrogen atoms in the molecule, such as diethylenetriamine, triethylenetetramine, tetraethylenepentamine (TEPA), pentaethylenehexamine (PEHA), hexaethyleneheptamine (HEHA) and higher polyethylene polyamines or polyethyleneamine mixtures.

Preference is given to using diethylenetriamine and triethylenetetramine.

The acids, or fatty acids, used for condensation of the polyethylene polyamines are monomeric, dimeric or polymerized, saturated or unsaturated, and can contain hydrocarbon radicals having 2-60 carbon atoms. Inventively preferred are fatty acids which contain at least 8 carbon atoms. To prepare the polyaminoamides which usually contain imidazoline groups, the polyethylene polyamine is charged to the reaction vessel and the fatty acid is added at 60°C-100°C. The reaction mixture is heated to 260°C and the water of reaction which forms is removed by distillation. The molar ratio of diamine or polyamine to acid groups is preferably from 1: 1 to 1:1.5.

The invention additionally provides a curable composition characterized in that it comprises a curable epoxide compound, a curing agent of the invention, and optionally one or more auxiliaries and additives customary in epoxy resin technology.

The epoxide compounds also used in accordance with the invention for the curable compositions are commercially customary products having on average more than one epoxide group per molecule and derived from mono- and/or polyhydric and/or polynuclear phenols, especially bisphenols and also novolaks, such as bisphenol A diglycidyl ether and bisphenol F diglycidyl ether, for example. An extensive compilation of these epoxide compounds is found in the handbook "Epoxidverbindungen und Epoxidharze" by A.M. Paquin, Springer Verlag Berlin, 1958, chapter IV, and also in Lee & Neville, "Handbook of Epoxy Resins", 1967, Chapter 2.

Compositions of two or more epoxide compounds can also be used.

Preference is given in accordance with the invention to compositions of glycidyl ethers based on bisphenol A. bisphenol F or novolaks with what are called reactive diluents, such as monoglycidyl ethers of phenols or glycidyl ethers based on mono- or polyhydric aliphatic or cyloaliphatic alcohols, for example. Examples of such reactive diluents Include phenyl glycidyl ether, cresyl glycidyl other, p-tert-butyl phenyl glycidyl ether, butyl glycidyl ether, C₁₂-C₁₄ alcohol glycidyl ether, butane diglycidyl ether, hexane diglycidyl ether, cyclohexanedimethyl diglycidyl ether or glycidyl ethers based on polyethylene glycols or polypropylene glycols. If necessary the viscosity of the epoxy resins can be reduced further by adding these reactive diluents.

The mixing ratio of curing agent of the invention to epoxy resin is preferably chosen equivalently; that is, one epoxide equivalent is used for each amine equivalent. Depending on the intended use and desired end properties of the cured thermoset, however, it is possible to employ a superstoichiometic or substoichiometric amount of the hardener component.

This invention provides in one instance for the use of the curable compositions of the invention for producing mouldings and sheetlike structures, and also for applications in the adhesives and sealants sector and for epoxy-resin mortars.

In the case of an inventive composition in the form of a straight combination of the components A) and B) - as compared with a straight combination of A) and C) - the resulting products tend to feature more rapid curing and better surfaces, whereas in the case of the combination of A) and C) the adhesion to various substrates tends to show a marked improvement. The user is therefore provided with the possibility, in accordance with the desired profile of requirements, of using an appropriate combination of A) and B) or C) as curing agents.

The invention further provides the cured products obtainable by curing a composition according to the invention. The epoxy resins also used can be cured hot and cold (room temperature) with the curing agents of the invention.

The epoxy resins can be cured in the presence of further adjuvants, such as auxiliaries and additives that are customary in epoxy resin technology. Examples that may be mentioned include gravel, sands, silicates, graphite, silicon dioxide, talc, mica, and so on, in the particle-size distributions that are customary in this area. In addition it is possible to use pigments, dyes, stabilizers, flow control agents, plasticizing agents, non-reactive extender resins, plasticizers and accelerators.

The curable compositions may further comprise the curing agents that are customary in epoxy resin technology, especially aminic curing agents, as co-hardeners.

The compositions of the invention can be used very generally as casting resins for producing cured products, and can be used in the formulation that is appropriate to the particular end use, for example, as adhesives, as matrix resins, as tooling resins or as coating materials.

### Examples:

The reported viscosity values each at 25°C were determined using a Haake VT 550 rotational viscometer in accordance with the manufacturer's specifications.

### Example 1: Preparation of an isolated adduct A)

309 g of diethylenetriamine (3 mol) are charged to a reaction vessel. After this initial charge has been heated to about 60°C, 185 g of cresyl glycidyl ether (1 epoxide equivalent) are added over the course of about 60 minutes. The temperature rises to 90°C. Subsequently the reaction product is heated to 260°C and the excess amine is separated off under reduced pressure (< 1 mbar). Distillate: 206 g (2 mol of DETA). Viscosity: 8500 mPa•s. Theoretical amine equivalent: about 72.

### Example 2: Preparation of an adduct B)

136 g of xylylenediamine are charged to a reaction vessel and heated to about 60°C. At 50°C-70°C over the course of about 60 minutes 92.9 g of acrylonitrile (1.75 mol) are added. For the complete reaction, stirring is continued for 60 minutes at 60°C to 80°C. Viscosity: 200 mPa•s. Theoretical amine equivalent: about 102.

### Example 3: Preparation of an adduct B)

158 g of trimethylhexamethylenediamine are charged to a reaction vessel and heated to about 60°C. At 50°C-70°C over the course of about 60 minutes 53 g of acrylonitrile (1.0 mol) are added. For the complete reaction, stirring is continued for 60 minutes at 60°C to 80°C. Viscosity: 50 mPa•s. Theoretical amine equivalent: about 70.

### Example 4: Hardener formulation comprising A) and B)

500 g of the adduct from Example 1 and 500 g of the xylylenediamine-acrylonitrile adduct from Example 2 are homogenized at 60°C to 70 °C. Viscosity: 900 mPa•s. Theoretical amine equivalent: about 85.

### Example 5: Hardener formulation comprising A) and B)

500 g of the adduct from Example 1 and 500 g of the trimethylhexamethylenediamine adduct from Example 3 are homogenized at 60°C to 70 °C.
Viscosity: 450 mPa•s. Theoretical amine equivalent: about 71.

### Example 6: Hardener formulation comprising A) and C)

500 g of the adduct from Example 1 and 500 g of Aradur 370 (polyaminoamide formed from monomeric fatty acid and triethylenetetramine, from Huntsman) are homogenized at 60°C to 70°C.
Viscosity: 1050 mPa•s. Theoretical amine equivalent: about 81.

### Example 7: Hardener formulation comprising A) and B) and C)

500 g of the adduct from Example 1, 250 g of the xylylenediamine-acrylonitrile adduct from Example 2 and 250 g of Aradur 370 (polyaminoamide formed from monomeric fatty acid and triethylenetetramine, from Huntsman) are homogenized at 60°C to 70 °C.
Viscosity: 970 mPa•s. Theoretical amine equivalent: about 83.

### Use examples: Cure rate and processing life (pot life)

Shore hardness D at 10°C with the epoxy resin Araldite GY 783 ¹⁾

| Hardener | MR ²) | Shore D after hours at 10°C | | | Gel time |
|---|---|---|---|---|---|
| | | 24 h / | 48 h / | 72 h | |
| Example 4 | 45 | 45 / | 64 / | 77 | 77 min. |
| Example 5 | 38 | 40 / | 63 / | 78 | 89 min. |
| Example 6 | 42 | 35 / | 62 / | 79 | 92 min. |
| Example 7 | 43 | 41 / | 65 / | 79 | 85 min. |
| Aradur 46 ³⁾ | 50 | 15 / | 62 / | 72 | 42 min. |
| Aradur 3278 ⁴⁾ | 50 | n.m. / | 35 / | 66 | 80 min. |

| | | | | | |
|---|---|---|---|---|---|
| ¹⁾ Araldite GY 783 is a bisphenol A/bisphenol F resin mixture modified with C₁₂/C₁₄ glycidyl ether and having a viscosity of about 1000 mPa•s (23°C) and an epoxide equivalent weight of about 190; ²⁾ MR= Mixing ratio =grams of hardener per 100 grams of Araldite GY 783; ³⁾ Plasticized polyamine adduct. Standard hardener for coatings and floor coverings (from Huntsman): ⁴⁾ Plasticizer-free and solvent-free polyaminoamide hardener (from Huntsman); ⁵⁾ n.m. = not measurable | | | | | |

### Discussion of results:

The cure rates of the curable compositions of the invention are very high at 10°C, while the processing lives are comparatively long. In direct comparison between the inventive examples and the comparative example as represented by Aradur 46, in fact, a much quicker cure with a much longer pot life is apparent, The comparison of Examples 5, 6 and 7 with Aradur 3278 shows a much quicker initial cure for a comparable pot life. Cure performance of this kind is desirable in practice, since on the one hand the processor has sufficient time to apply the curable mixture while on the other hand, in the coating sector for example, the coating can be accessed or worked on very rapidly. This result could not have been foreseen. Instead the expectation would have been that a relatively long processing life would be accompanied also by a slower cure rate.

Besides the outstanding cure rate in conjunction with comparatively long pot life, it was possible to observe a very good level in terms of the surface quality.
In this context mention may be made in particular of the resistance to texturing/hydrate formation, since these features, besides the necessary moisture compatibility, also play an important part in respect of intercoat adhesion.

## Claims

1. Curing agent for epoxy resins, consisting of
A) 1% - 99% by weight of an adduct obtainable by reacting a1) a polyethylene polyamine having up to six nitrogens in the molecule with a2) a monoglycidyl ether, and
B) 99%-1% by weight of an adduct obtainable by reacting b1) a diamine or polyamine with b2) acrylonitrile or
C) 99% to 1% by weight of a polyaminoamide.

2. Curing agent for epoxy resins according to Claim 1, consisting of A) 1%-99% by weight of an adduct obtainable by reacting a1) a polyethylene polyamine having up to six nitrogens in the molecule with a2) a monoglycidyl ether, and
B) 99%-1 % by weight of an adduct obtainable by reacting b1) a diamine or polyamine with b2) acrylonitrile.

3. Curing agent according to Claim 1 or 2, **characterized in that** the adduct of a1) and a2) is isolated by removal of the excess polyethylene polyamine.

4. Curing agent according to Claim 1 or 2, **characterized in that** the compound a1) is selected from ethylenediamine and/or diethylenetriamine.

5. Curing agent according to Claim 1 or 2, **characterized in that** the compound a2) is an aromatic monoglycidyl ether.

6. Curing agent according to Claim 1 or 2, **characterized in that** the compound a2) is phenyl glycidyl ether or cresyl glycidyl ether.

7. Curing agent according to Claim 1 or 2, **characterized in that** for the formation of the adduct B) there are 0.1 to 2.5 equivalents of component b2) per mole of component b1).

8. Curing agent according to Claim 1 or 2, **characterized in that** the amine compound b1) is trimethylhexamethylenediamine and/or xylylenediamine.

9. Curing agent for epoxy resins according to Claim 1, consisting of
A) 1%-99% by weight of an adduct obtainable by reacting a1) a polyethylene polyamine having up to six nitrogens in the molecule with a2) a monoglycidyl ether, and
C) 99%-1% by weight of a polyaminoamide.

10. Curing agent according to Claim 1 or 9, **characterized in that** the amino compound used for preparing the polyaminoamide C) is a polyethyleneamine having 3 or 4 amine nitrogens.

11. Curing agent according to Claim 1 or 9, **characterized in that** the acid compound for preparing the polyaminoamide C) is a monomeric, dimeric or polymerized fatty acid having more than 8 carbon atoms.

12. Curable composition, **characterized in that** it comprises a curable epoxide compound, a curing agent according to Claim 1), and, optionally, amine compounds and/or auxiliaries and additives that are customary in epoxy resin technology.

13. Curable composition according to Claim 12, **characterized in that** the epoxy resin is a bisphenol glycidyl ether or epoxy novolak and is diluted with a reactive diluent.

14. Use of a curable composition according to Claim 12 as an adhesive, matrix resin, tooling resin or coating material.

15. Cured product obtainable by curing a composition according to Claim 12.

## Patentansprüche

1. Härtemittel für Epoxidharze, das aus
A) 1-99 Gew.-% eines Addukts, das durch Umsetzen a1) eines Polyethylenpolyamins mit bis zu sechs Stickstoffen im Molekül mit a2) einem Monoglycidylether erhältlich ist, und
B) 99-1 Gew.-% eines Addukts, das durch Umsetzen b1) eines Diamins oder Polyamins mit b2) Acrylonitril erhältlich ist, und/oder
C) 99 bis 1 Gew.-% eines Polyaminoamids besteht.

2. Härtemittel für Epoxidharze gemäß Anspruch 1, das aus
A) 1-99 Gew.-% eines Addukts, das durch Umsetzen a1) eines Polyethylenpolyamins mit bis zu sechs Stickstoffen im Molekül mit a2) einem Monoglycidylether erhältlich ist, und
B) 99-1 Gew.-% eines Addukts, das durch Umsetzen b1) eines Diamins oder Polyamins mit b2) Acrylonitril erhältlich ist,
besteht.

3. Härtemittel gemäß Anspruch 1 oder 2, **dadurch gekennzeichnet, dass** das Addukt von a1) und a2) durch Entfernen des Überschusses an Polyethylenpolyamin isoliert wird.

4. Härtemittel gemäß Anspruch 1 oder 2, **dadurch gekennzeichnet, dass** die Verbindung a1) aus Ethylendiamin und/oder Diethylentriamin ausgewählt wird.

5. Härtemittel gemäß Anspruch 1 oder 2, **dadurch gekennzeichnet, dass** die Verbindung a2) ein aromatischer Monoglycidylether ist.

6. Härtemittel gemäß Anspruch 1 oder 2, **dadurch gekennzeichnet, dass** die Verbindung a2) Phenylglycidylether oder Cresylglycidylether ist.

7. Härtemittel gemäß Anspruch 1 oder 2, **dadurch gekennzeichnet, dass** für die Bildung des Addukts B) 0.1 bis 2.5 Äquivalente der Komponente b2) pro Mol der Komponente b1) vorhanden sind.

8. Härtemittel gemäß Anspruch 1 oder 2, **dadurch gekennzeichnet, dass** die Aminverbindung b1) Trimethylhexamethylendiamin und/oder Xylylendiamin ist.

9. Härtemittel für Epoxidharze gemäß Anspruch 1, das aus
A) 1-99 Gew.-% eines Addukts, das durch Umsetzen a1) eines Polyethylenpolyamins mit bis zu sechs Stickstoffen im Molekül mit a2) einem Monoglycidylether erhältlich ist, und
c) 99 bis 1 Gew.-% eines Polyaminoamids
besteht.

10. Härtemittel gemäß Anspruch 1 oder 9, **dadurch gekennzeichnet, dass** die für die Herstellung des Polyaminoamids C) verwendete Aminoverbindung Polyethylenamin mit 3 oder 4 Aminstickstoffen ist.

11. Härtemittel gemäß Anspruch 1 oder 9, **dadurch gekennzeichnet, dass** die Säureverbindung zur Herstellung des Polyaminoamids C) eine monomere, dimere oder polymerisierte Fettsäure mit mehr als 8 Kohlenstoffatomen ist.

12. Härtbare Zusammensetzung, **dadurch gekennzeichnet, dass** sie eine härtbare Epoxidverbindung, ein Härtemittel gemäß Anspruch 1) und optional Aminverbindungen und/oder Hilfsstoffe und Additive, die in der Epoxidharztechnologie üblich sind, umfasst.

13. Härtbare Zusammensetzung gemäß Anspruch 12, **dadurch gekennzeichnet, dass** das Epoxidharz ein Bisphenolglycidylether oder Epoxidnovolak ist und mit einem reaktiven Verdünnungsmittel verdünnt ist.

14. Verwendung einer härtbaren Zusammensetzung gemäß Anspruch 12 als ein Klebstoff, Matrixharz, Werkzeugharz oder Beschichtungsmaterial.

15. Gehärtetes Produkt, das durch Härten einer Zusammensetzung gemäß Anspruch 12 erhältlich ist.

## Revendications

1. Durcisseur pour résines époxy, consistant en :
A) 1 % à 99 % en poids d'un produit d'addition pouvant être obtenu en faisant réagir a1) une polyéthylènepolyamine ayant jusqu'à six atomes d'azote dans la molécule avec a2) un éther de monoglycidyle, et
B) 99 % à 1 % en poids d'un produit d'addition pouvant être obtenu en faisant réagir b1) une diamine ou polyamine avec b2) de l'acrylonitrile, et/ou
C) 99 % à 1 % en poids d'un polyaminoacide.

2. Durcisseur pour résines époxy suivant la revendication 1, consistant en A) 1 % à 99 % en poids d'un produit d'addition pouvant être obtenu en faisant réagir a1) une polyéthylènepolyamine ayant jusqu'à six atomes d'azote dans la molécule avec a2) un éther de monoglycidyle, et
B) 99 % à 1 % en poids d'un produit d'addition pouvant être obtenu en faisant réagir b1) une diamine ou polyamine avec b2) de l'acrylonitrile.

3. Durcisseur suivant la revendication 1 ou 2, **caractérisé en ce que** le produit d'addition de a1) et a2) est isolé par élimination de l'excès de polyéthylènepolyamine.

4. Durcisseur suivant la revendication 1 ou 2, **caractérisé en ce que** le composé a1) est choisi entre l'éthylènediamine et/ou la diéthylènetriamine.

5. Durcisseur suivant la revendication 1 ou 2, **caractérisé en ce que** le composé a2) est un éther de monoglycidyle aromatique.

6. Durcisseur suivant la revendication 1 ou 2, **caractérisé en ce que** le composé a2) est l'éther phénylique de glycidyle ou l'éther crésylique de glycidyle.

7. Durcisseur suivant la revendication 1 ou 2, **caractérisé en ce que**, pour la formation du produit d'addition B), il existe 0,1 à 2,5 équivalents de constituant b2) par mole de constituant b1).

8. Durcisseur suivant la revendication 1 ou 2, **caractérisé en ce que** l'amine b1) est la triméthylhexaméthylènediamine et/ou le xylylènediamine.

9. Durcisseur pour résines époxy suivant la revendication 1, consistant en
A) 1 % à 99 % en poids d'un produit d'addition pouvant être obtenu en faisant réagir a1) une polyéthylènepolyamine ayant jusqu'à 6 atomes d'azote dans la molécule avec a2) un éther de monoglycidyle, et
C) 99 % à 1 % en poids d'un polyaminoamide.

10. Durcisseur suivant la revendication 1 ou 9, **caractérisé en ce que** le composé à fonction amino utilisé pour la préparation du polyaminoamide C) est une polyéthylène-amine ayant 3 ou 4 atomes d'azote d'amine.

11. Durcisseur suivant la revendication 1 ou 9, **caractérisé en ce que** le composé acide pour la préparation du polyaminoamide C) est un acide gras monomère, dimère ou polymérisé ayant plus de 8 atomes de carbone.

12. Composition durcissable, **caractérisée en ce qu'**elle comprend un époxyde durcissable, un durcisseur suivant la revendication 1 et, facultativement, des amines et/ou des auxiliaires et additifs qui sont usuels dans la technologie des résines époxy.

13. Composition durcissable suivant la revendication 12, **caractérisée en ce que** la résine époxy est un éther glycidylique de bisphénol ou une résine époxy novolaque et est diluée avec un diluant réactif.

14. Utilisation d'une composition durcissable suivant la revendication 12 comme adhésif, résine de matrice, résine pour la fabrication de moules ou matière de revêtement.

15. Produit durci pouvant être obtenu par durcissement d'une composition suivant la revendication 12.
